# EUROPÄISCHE PATENTSCHRIFT

(11) **EP 0 763 191 B1**
(45) Veröffentlichungstag und Bekanntmachung des Hinweises auf die Patenterteilung: **02.01.2004**
(21) Anmeldenummer: 96905752.0
(22) Anmeldetag: 09.03.1996
(51) Int. Cl.: G01F 1/692, G01F 1/696

(54) **THERMISCHER DURCHFLUSS-SENSOR**
THERMAL FLOW SENSOR
DETECTEUR THERMIQUE DE DEBIT

(30) Priorität: 16.03.1995 DE 19509555
(43) Veröffentlichungstag der Anmeldung: 19.03.1997
(73) Patentinhaber: ROBERT BOSCH GMBH, 70442 Stuttgart (DE)
(72) Erfinder: LOCK, Andreas, D-72770 Reutlingen (DE); KONZELMANN, Uwe, D-71679 Asberg (DE)
(86) Internationale Anmeldenummer: PCT/DE1996/000486
(87) Internationale Veröffentlichungsnummer: WO 1996/028712

(56) Entgegenhaltungen:
- DE-A- 1 947 211
- US-A- 4 478 077
- PATENT ABSTRACTS OF JAPAN vol. 012 no. 319 (P-751) ,30.August 1988 & JP,A,63 085364 (SHARP CORP) 15.April 1988,

## Beschreibung

### Stand der Technik

Die Erfindung geht aus von einem Durchflußsensor nach der Gattung des unabhängigen Anspruchs. Aus der US 4,581,928 ist bereits ein Durchflußsensor mit einer Membran bekannt, wobei auf der Membran ein Heizer und zu jeder Seite des Heizers ein Temperatursensor angeordnet ist. Der Heizer und die Temperatursensoren sind aus einer Widerstandsschicht herausstrukturiert. Zur Auswertung sind die Temperatursensoren mit weiteren Widerständen in einer Meßbrückenschaltung angeordnet.

Ein ähnlicher Sensor ist aus US 4,478,077 bekannt.

### Vorteile der Erfindung

Der erfindungsgemäße Durchflußsensor mit den kennzeichnenden Merkmalen des unabhängigen Anspruchs hat demgegenüber den Vorteil, daß eine Verbesserung des Signals des Sensorelements erreicht wird. Dabei ist nur ein geringfügig höhrerer Aufwand erforderlich. Weiterhin ist das Sensorelement symmetrisch ausgestaltet, so daß ein guter Gleichlauf der Signale der einzelnen Temperatursensoren erreicht wird. Der Aufwand ist besonders gering, da alle Elemente aus ein und derselben Widerstandsschicht herausstrukturiert werden. Fertigungstoleranzen haben daher nur einen geringen Einfluß auf das Meßelement.

Durch die in den abhängigen Ansprüchen aufgeführten Maßnahmen sind vorteilhafte Weiterbildungen und Verbesserungen des im unabhängigen Anspruch angegebenen Durchflußsensor möglich. Die Temperatursensoren und die weiteren Temperatursensoren können ineinander oder auch nebeneinander angeordnet sein. Ohne weiteren Mehraufwand können Zuleitungen für den Heizer, die Temperatursensoren und die weiteren Temperatursensoren aus der Widerstandsschicht herausgebildet sein. Besonders einfach und präzise erfolgt der Nachweis des Sensorsignals durch die Anordnung der Temperatursensoren und der weiteren Temperatursensoren in einer Meßbrücke. Parallel zum Verbindungswiderstand werden dabei zweckmäßigerweise Abgleichswiderstände geschaltet, durch die ein Abgleich der Brücke erfolgen kann. Um den Temperaturkoeffizienten des Verbindungswiderstands auszuschalten, können dabei die Abgleichswiderstände vergleichsweise hochohmig ausgebildet sein.

### Zeichnungen

Ausführungsbeispiele der Erfindung sind in den Zeichnungen dargestellt und in der nachfolgenden Beschreibung näher erläutert. Es zeigen die Figur 1 eine Aufsicht auf ein erstes erfindungsgemäßes Meßelement, Figuren 2 und 3 weitere Ausführungsbeispiele und die Figur 4 ein Ersatzschaltbild der Meßbrücke.

### Beschreibung der Ausführungsbeispiele

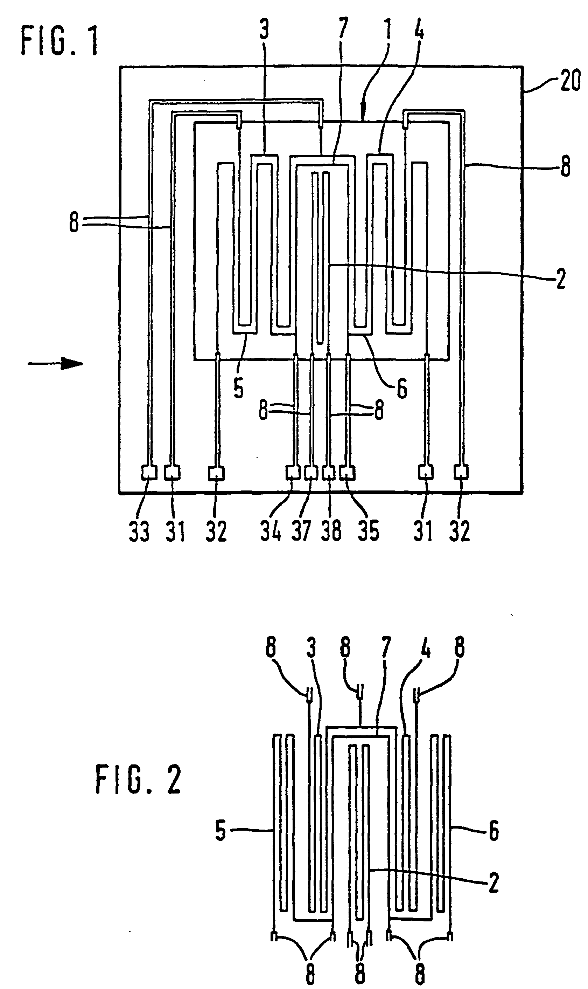

In der Figur 1 wird eine Aufsicht auf ein erfindungsgemäßes Meßelement gezeigt. Das Meßelement besteht aus einem Substrat 20, durch das eine Membran 1 gehaltert wird. Die Membran 1 weist eine besonders geringe thermische Trägheit und ein besonders geringes thermisches Leitvermögen auf. Auf der Membran 1 ist ein Heizer 2, Temperatursensoren 3 und 4, weitere Temperatursensoren 5, 6 und ein Verbindungswiderstand 7 vorgesehen. Durch den Heizer 2 wird die Membran auf eine vorgegebene Temperatur erwärmt. Wenn dann, wie durch den Pfeil angedeutet, auf der Oberseite der Membran ein Medienstrom entlangströmt, so wird die Membran durch diesen Medienstrom abgekühlt. Die in Strömungsrichtung Flußaufwärts liegenden Widerstände 3 und 5 werden dabei stärker abgekühlt als die flußabwärts gelegenen Widerstände 4 und 6. Durch Nachweis dieser Temperaturdifferenz kann auf die Stärke der Strömung geschlossen werden.

Der Heizer 2 ist als Widerstandselement ausgebildet, das heißt durch einen elektrischen Stromfluß durch den Heizer 2 hindurch wird der Heizer erwärmt. Die Temperaturmeßsensoren 3, 4, 5 und 6 sind als Widerstandsthermometer ausgebildet, das heißt durch eine Messung der am Widerstand abfallenden Spannung kann die Temperatur der einzelnen Meßelemente bestimmt werden.

Zur Kontaktierung des Heizers 2, und der Temperatursensoren 3, 4 und der weiteren Temperatursensoren 5, 6 sind Leiterbahnen 8 und Bondpads 31 - 38 vorgesehen. Auf den Bondpads 31 - 38 werden Drähte befestigt, die einen elektrischen Kontakt zu einer Auswerteschaltung herstellen. Die Weiterleitung der elektrischen Signale auf dem Substrat 20 erfolgen durch die Leiterbahnen 8.

Wie bei der US 4,581,928 bzw. US 4,478,077 wird für das Substrat 20 an ein Siliziumsubstrat gedacht. Für die Membran 1 wird auf der Oberseite des Substrats 20 eine dünne dielektrische Schicht aufgebracht und es wird dann das Substrat 20 unterhalb der Membran 1 entfernt. Dies kann wie bei der US 4,581,928 durch Öffnungen in der Membran erfolgen. Alternativ ist es jedoch auch möglich, vorausgehend von der Rückseite des Substrats 20 eine Öffnung bis zur Membranschicht zu ätzen und so die Membran 1 herzustellen. Neben Silizium sind natürlich auch andere Materialien für das Substrat 20 geeignet.

Die Herstellung des Heizers 2, der Widerstände 3, 4, 5, 6 und 7, der Leiterbahnen 8 und der Bondpads 31 - 38 erfolgt durch Strukturierung einer zunächst ganzflächig aufgebrachten Schicht. Die Leiterbahnen 8 weisen einen wesentlich größeren Querschnitt auf, so daß deren Widerstand verhältnismäßig gering ist gegenüber den Widerständen 2 bis 7. Für die Funktion des Sensors ist es von besonderer Bedeutung, daß die stromaufwärts gelegenen Widerstandselemente 3, 5 und die stromabwärts gelegenen Widerstandselemente 4 und 6 jeweils symmetrisch zum Heizer 2 angeordnet sind. Aufgrund der nicht vernachlässigbaren Restwiderstände der Leiterbahnen 8 sollten auch diese symmetrisch zu den Widerständenn 3, 4, 5 und 6 geführt werden. Wenn alle Elemente aus einer einzigen Schicht herausstrukturiert werden, ist es nicht möglich eine Überkreuzung von Leiterbahnen zu realisieren. Zwischen den weiteren Widerstandselementen 5 und 6 ist daher ein verbindungswiderstand 7 angeordnet, der eine elektrische Verbindung zwischen diesen beiden Widerstandselementen herstellt. Dies ermöglicht es, die Leiterbahnen 8 symmetrisch an die Widerstände 5 und 6 heranzuführen.

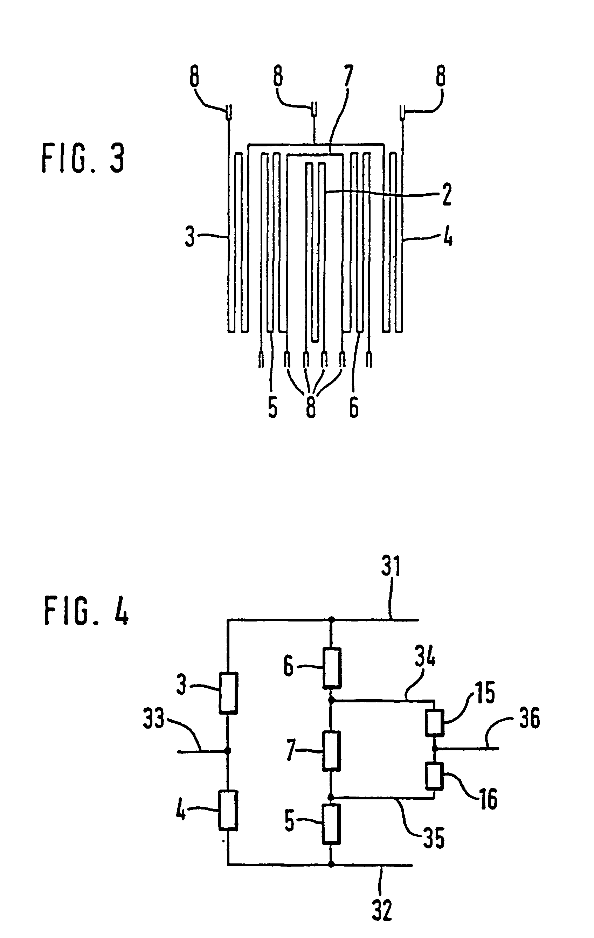

In der Figur 4 wird ein Ersatzschaltbild der Auswerteschaltung des Meßelements gezeigt. Die Temperatursensoren 3, 4 bilden einen ersten Meßbrückenzweig mit einem Mittelabgriff 33. Die weiteren Temperaturmeßsensoren 6, 7 und 5 bilden einen zweiten Meßbrückenzweig mit zwei Abgriffen 34, 35. Der Anschluß 31 ist mit einer Versorgungsspannung und der Anschluß 32 mit Masse verbunden. Die Abgriffe 31 - 35 entsprechen Bondpads die in der Aufsicht auf das Meßelement nach Figur 1 zu sehen sind.

In der Auswerteschaltung sind weiterhin Abgleichswiderstände 15 und 16 vorgesehen, die parallel zum Verbindungswiderstand 7 geschaltet sind. Zwischen den Abgleichswiderständen 15 und 16 ist ein korrigierter Brückenabgriff 36 vorgesehen. Durch ein Abgleich der Widerstandswerte der Widerstände 15 und 16 kann der Nullpunkt der Meßbrücke abgeglichen werden.

Wie in der Figur 1 zu erkennen ist, sind alle in der Meßbrücke angeordneten Widerstände auf der Membran gelegen, so daß sich der Widerstand jedes Brückenwiderstands mit der Medienströmung ändert. Die so gebildete Brückenschaltung weist somit ein besonders starkes Signal auf. Problematisch ist jedoch die symmetrische Heranführung der Leiterbahnen 8 an die einzelnen widerstände. Wegen der Brückenanordnung wird bei einer unsymmetrischen Heranführung der Leiterbahnen 8 aufgrund des nicht vernachlässigbaren Restwiderstandes dieser Leiterbahnen 8 bereits im Ansatz eine unsymmetrische Brückenschaltung mit einer entsprechend verzerrten Kennlinie erzeugt. Alle Leiterbahnen müssen daher symmetrisch an die Widerstände auf der Membran herangeführt werden. Beim Brückenzweig, der durch die Widerstände 3 und 4 gebildet wird, ist eine einzige Leiterbahn für den Abgriff 33 vorgesehen. Ein derartiger Abgriff wäre auch für den Brückenzweig, der durch die Widerstände 5 und 6 gebildet wird, optimal. Wenn alle Widerstände 2 bis 7 und alle Leiterbahnen 8 aus einer einzigen Schicht herausstrukturiert werden, ist jedoch ein derartiger Abgriff nicht möglich. Um eine symmetrische Heranführung zu ermöglichen, ist daher der Verbindungswiderstand 7 vorgesehen, der dann die symmetrische Heranführung von zwei Abgriffen 34 und 35 erlaubt. Die beiden Signale an den Abgriffen 34 und 35 werden dann über die Abgleichswiderstände 15 und 16 zu einem korrigierten Brückenabgriff 36 vereinigt. Durch eine entsprechende Einstellung der Widerstandswerte 15 und 16 kann dabei noch ein gewisses Restungleichgewicht der Brücke kompensiert werden. Problematisch kann dabei sein, wenn der Verbindungswiderstand 7 seinen Widerstandswert ebenfalls aufgrund der Temperatur auf der Membran ändert. Wenn der Gesamtwiderstand der Widerstände 15 und 16 vergleichsweise hochohmig gegenüber dem Widerstandswert des Verbindungswiderstands 7 ist, so beeinfluß dieser Temperaturgang des Verbindungswiderstands 7 das Ausgangssignal am Abgriff 36 nur im geringen Maße.

In der Figur 1 sind die Temperatursensoren 3, 4 und die weiteren Temperatursensoren 5, 6 als ineinander geschachtelte mäanderförmige Widerstandsbahnen ausgebildet. Der Temperatursensor 3 ist somit auf der gleichen Membranfläche gelegen, wie der weitere Temperatursensor 5. Der Temperatursensor 4 ist auf derselben Membranfläche angeordnet, wie der weitere Temperatursensor 6. Durch diese Anordnung messen die Temperatursensoren 3 und 4 die Temperatur auf den gleichen Membranbereichen wie die beiden Temperatursensoren 5 und 6.

In den Figuren 2 und 3 wird eine andere Anordnung der Temperatursensoren 3, 4 und der weiteren Temperatursensoren 5, 6 gezeigt. Aus Gründen der Vereinfachung wurde auf die Darstellung der Membran, der Leiterbahnen und des Substrats 20 verzichtet. In der Figur 1 überdecken die Temperatursensoren 3, 4 und die weiteren Temperatursensoren 5, 6 denselben Bereich der Membran, wobei sie durch die Ineinanderschachtelung eine relativ große Fläche überdecken. In der Figur 2 wird eine Anordnung gezeigt, bei der die einzelnen Widerstandselemente für die Temperatursensoren 3, 4, 5 und 6 nicht ineinandnergeschachtelt sind und daher wesentlich kompakter gebaut werden können. Da ausgehend vom zentral angeordneten Heizer 2 ein Temperaturgradient in der Membran besteht, wird durch die kompaktere Anordnung der Widerstandselemente 3, 4, 5 und 6 und die damit verbundene Überdeckung nur eines kleinen Membranbereichs, jeder Temperatursensor nur einem relativ kleinen Temperaturgradienten ausgesetzt. In der Figur 2 wird eine Anordnung gezeigt, bei dem die Temperatursensoren 3, 4 innen, das heißt in der Nähe des Heizers 2 angeordnet sind und die weiteren Temperatursensoren 5, 6 weiter außerhalb, das heißt außen angeordnet sind. In der Figur 3 wird eine Anordnug gezeigt, bei der die weiteren Temperatursensoren 5, 6 innen, das heißt in der Nähe des Heizers 2 und die Temperatursensoren 3, 4 außen, das heißt weiter vom Heizer entfernt, angeordnet sind.

## Patentansprüche

1. Durchflußsensor mit einem Meßelement, wobei das Meßelement eine Membran (1) und auf der Membran (1) eine Widerstandsschicht aufweist aus der mindestens ein Heizer (2) und auf jeder Seite des Heizers (2) ein Temperatursensor (3, 4) herausstrukturiert ist, wobei die Temperatursensoren (3,4) symmetrisch zum Heizer (2) angeordnet sind, **dadurch gekennzeichnet, daß** auf jeder Seite des Heizers ein weiterer Temperatursensor (5, 6) vorhanden ist, wobei die weiteren Temperatursensoren (5,6) symmetrisch zum Heizer (2) angeordnet sind, daß ein Verbindungswiderstand (7) vorhanden ist, der die beiden weiteren Temperatursensoren (5,6) miteinander verbindet, daß die weiteren Temperatursensoren (5, 6) und der Verbindungswiderstand (7) auf der Membran gelegen sind, und daß die weiteren Temperatursensoren (5, 6) und der Verbindungswiderstand (7) aus der Widerstandsschicht herausgebildet sind.

2. Durchflußsensor nach Anspruch 1, **dadurch gekennzeichnet, daß** die Temperatursensoren (3, 4) und die weiteren Temperatursensoren (5, 6) als meanderförmige ineinanderverschachtelte Widerstandselemente ausgebildet sind.

3. Durchflußsensor nach Anspruch 1, **dadurch gekennzeichnet, daß** die Temperatursensoren (3, 4) näher zum Heizer (2) angeordnet sind, als die weiteren Temperatursensoren (5, 6).

4. Durchflußsensor nach Anspruch 1, **dadurch gekennzeichnet, daß** die weiteren Temperatursensoren (5, 6) näher zum Heizer (2) angeordnet sind als die Temperatursensoren (3, 4).

5. Durchflußsensor nach einem der vorhergehenden Ansprüche, **dadurch gekennzeichnet, daß** Zuleitungen (8) zur Kontaktierung des Heizers (2), der Temperatursensoren (3, 4) der weiteren Temperatursensoren (5, 6) und des Verbindungswiderstands (7) vorgesehen sind, und daß die Zuleitungen (8) aus der Widerstandsschicht herausgebildet sind.

6. Durchflußsensor nach einem der vorhergehenden Ansprüche, **dadurch gekennzeichnet, daß** eine Meßbrücke gebildet wird, daß die Temperatursensoren (3, 4) einen ersten Zweig der Meßbrücke mit einem zwischen den beiden Temperatursensoren gelegenen Mittelabgriff (33) bilden, daß die weiteren Temperatursensoren (5, 6) mit dem Verbindungswiderstand (7) einen zweiten Zweig der Meßbrücke bilden wobei der Verbindungswiderstand zwischen den beiden weiteren Temperatursensoren (5, 6) angeordnet ist, wobei der zweite Zweig der Meßbrücke zwei Abgriffe (34, 35) aufweist, die jeweils zwischen dem Verbindungswiderstand (7) und jedem der beiden weiteren Temperatursensoren (5, 6) angeordnet ist.

7. Durchflußsensor nach Anspruch 6, **dadurch gekennzeichnet, daß** zwei Abgleichwiderstände (15, 16) vorgesehen sind, daß die beiden Abgleichwiderstände (15, 16) in Reihe zwischen den beiden Abgriffen (34, 35) des zweiten Brückenzweigs angeordnet sind, und daß zwischen den Abgleichwiderständen (14, 16) ein kompensierter Abgriff (36) vorgesehen ist.

8. Durchflußsensor nach Anspruch 7, **dadurch gekennzeichnet, daß** die Abgleichswiderstände (15, 16) hochohmig sind im Vergleich zum Verbindungswiderstand (7).

## Claims

1. Flow sensor with a measuring element, the measuring element having a diaphragm (1) and, on the diaphragm (1), a resistance layer from which there is structured at least one heater (2) and, on either side of the heater (2), a temperature sensor (3, 4), the temperature sensors (3, 4) being arranged symmetrically with the heater (2), **characterized in that** a further temperature sensor (5, 6) is present on either side of the heater, the further temperature sensors (5, 6) being arranged symmetrically with the heater (2), **in that** a connecting resistor (7) is present which connects the two further temperature sensors (5, 6) to one another, **in that** the further temperature sensors (5, 6) and the connecting resistor (7) are situated on the diaphragm, and **in that** the further temperature sensors (5, 6) and the connecting resistor (7) are formed from the resistance layer.

2. Flow sensor according to Claim 1, **characterized in that** the temperature sensors (3, 4) and the further temperature sensors (5, 6) are constructed as meandering interleaved resistor elements.

3. Flow sensor according to Claim 1, **characterized in that** the temperature sensors (3, 4) are arranged closer to the heater (2) than the further temperature sensors (5, 6).

4. Flow sensor according to Claim 1, **characterized in that** the further temperature sensors (5, 6) are arranged closer to the heater (2) than the temperature sensors (3, 4).

5. Flow sensor according to one of the preceding claims, **characterized in that** supply leads (8) are provided for making contact with the heater (2), the temperature sensors (3, 4), the further temperature sensors (5, 6) and the connecting resistor (7), and **in that** the supply leads (8) are formed from the resistance layer.

6. Flow sensor according to one of the preceding claims, **characterized in that** a measuring bridge is formed, **in that** the temperature sensors (3, 4) form a first arm of the measuring bridge with a centre tap (33) situated between the two temperature sensors, **in that** the further temperature sensors (5, 6) form with the connecting resistor (7) a second arm of the measuring bridge, the connecting resistor being arranged between the two further temperature sensors (5, 6), the second arm of the measuring bridge having two taps (34, 35) which are arranged respectively between the connecting resistor (7) and each of the two further temperature sensors (5, 6).

7. Flow sensor according to Claim 6, **characterized in that** two trimming resistors (15, 16) are provided, **in that** the two trimming resistors (15, 16) are arranged in series between the two taps (34, 35) of the second bridge arm, and **in that** a compensated tap (36) is provided between the trimming resistors (14, 16).

8. Flow sensor according to Claim 7, **characterized in that** the trimming resistors (15, 16) are of high resistance by comparison with the connecting resistor (7).

## Revendications

1. Capteur de débit comportant un élément de mesure ayant une membrane (1) et sur celle-ci une couche résistante dans laquelle on a dégagé au moins un élément chauffant (2) et de chaque côté de l'élément chauffant (2), un capteur de température (3, 4) par dégagement de structure,
les capteurs de température (3, 4) étant disposés symétriquement par rapport à l'élément chauffant (2),
**caractérisé en ce que**
de chaque côté de l'élément chauffant on a un autre capteur de température (5, 6),
les autres capteurs de température (5, 6) étant symétriques par rapport à l'élément chauffant (2),
une résistance de liaison (7) reliant les deux autres capteurs de température (5, 6),
ces autres capteurs de température (5, 6) et la résistance de liaison (7) étant disposés sur la membrane et
les autres capteurs de température (5, 6) et la résistance de liaison (7) étant dégagés de la couche résistante.

2. Détecteur de débit selon la revendication 1,
**caractérisé en ce que**
les capteurs de température (3, 4) et les autres capteurs de température (5, 6) sont des éléments résistants imbriqués suivant un tracé en méandres.

3. Détecteur de débit selon la revendication 1,
**caractérisé en ce que**
les capteurs de température (3, 4) sont plus proches de l'élément chauffant (2) que les autres capteurs de température (5, 6).

4. Détecteur de débit selon la revendication 1,
**caractérisé en ce que**
les autres capteurs de température (5, 6) sont plus proches de l'élément chauffant (2) que les capteurs de température (3, 4).

5. Détecteur de débit selon l'une des revendications précédentes,
**caractérisé par**
des conduites de liaison (8) pour le branchement de l'élément chauffant (2), les capteurs de température (3, 4), les autres capteurs de température (5, 6) et la résistance de liaison (7) et
les lignes d'alimentation (8) sont formées dans la couche résistante.

6. Détecteur de débit selon l'une des revendications précédentes,
**caractérisé en ce qu'**
on forme un pont de mesure,
les capteurs de température (3, 4) formant une première branche du pont de mesure avec une prise médiane (33) entre les deux capteurs de température,
les autres capteurs de température (5, 6) formant avec la résistance de liaison (7), une seconde branche et
la résistance de liaison est prévue entre les deux autres capteurs de température (5, 6),
la seconde branche du pont de mesure ayant deux prises (34, 35) prévues chaque fois entre la résistance de liaison (7) et chacun des deux autres capteurs de température (5, 6).

7. Détecteur de débit selon la revendication 6,
**caractérisé par**
deux résistances de compensation ( 15, 16),
les deux résistances de compensation (15, 16) étant branchées en série entre les deux prises (34, 35) de la seconde branche du pont et
une prise compensée (36) est prévue entre les résistances de compensation (14, 16).

8. Détecteur de débit selon la revendication 7,
**caractérisé en ce que**
les résistances de compensation (15, 16) sont fortement ohmiques par rapport à la résistance de liaison (7).
